# EUROPEAN PATENT APPLICATION

(11) **EP 4 847 765 A1**
(43) Date of publication of application: **02.12.2026**
(21) Application number: 26177867.4
(22) Date of filing: 11.05.2026
(51) Int. Cl.: F02K 5/00, B64D 27/33, B64D 31/18, B64D 35/022, F02C 9/00

(54) **TURBINE ENGINE CONTROL SYSTEM AND METHOD OF OPERATING A TURBINE ENGINE**

(30) Priority: 30.05.2025 IT 202500012712
(71) Applicant: GE Avio S.r.l., 10040 Rivalta di Torino (TO) (IT)
(72) Inventor: DI LEO, Diego, 10040 Rivalta di Torino (IT); LAI, Cristian, 10040 Rivalta di Torino (IT)
(74) Representative: Openshaw & Co.

(57) **Abstract**

A turbine engine control system for a turbine engine. The turbine engine has a turbo-engine, an electric machine, and a propulsor drivingly coupled to the turbo-engine and the electric machine. The turbine engine control system includes one or more mode selector switch mechanisms and a controller. The one or more mode selector switch mechanisms have a plurality of modes that each defines a different power output split configuration between the turbo-engine and the electric machine. The controller receives an input of a selected mode of the plurality of modes from the one or more mode selector switch mechanisms and controls a power output split between the turbo-engine and the electric machine based on the selected mode.

## Description

### STATEMENT REGARDING GOVERNMENT SPONSORED RESEARCH OR

### DEVELOPMENT

This invention was co-funded by the European Union under Grant Agreement No. 101102020.

### TECHNICAL FIELD

The present disclosure relates generally to turbine engines, and, particularly, to turbine engine control systems for turbine engines of aircraft and methods of operating turbine engines.

### BACKGROUND

Turbine engines, particularly, turboprop engines, for an aircraft generally include a propulsor, such as a propeller, and a turbo-engine arranged in flow communication with one another. The turbo-engine includes a compressor, a combustor, and a turbine section. Some turbine engines include an electric machine to provide power to the propulsor.

### BRIEF DESCRIPTION OF THE DRAWINGS

Features and advantages will be apparent from the following, more particular, description of various exemplary embodiments, as illustrated in the accompanying drawings, wherein like reference numbers generally indicate identical, functionally similar, or structurally similar elements.
FIG. 1 is a schematic, partial cutaway view of a turbine engine, according to several embodiments of the present disclosure.
FIG. 2 is a schematic view of the turbine engine of FIG. 1 having a turbine engine control system, according to several embodiments of the present disclosure.
FIG. 3 is a schematic view of the turbine engine control system of FIG. 2, according to several embodiments of the present disclosure.
FIG. 4 is a schematic diagram of a selection process of the turbine engine control system of FIG. 3, according to several embodiments of the present disclosure.
FIG. 5A is a graph showing throttle position versus power level in a full turbo-engine mode of the turbine engine control system, according to several embodiments of the present disclosure.
FIG. 5B is a graph showing throttle position versus power level in a full electric mode of the turbine engine control system, according to several embodiments of the present disclosure.
FIG. 5C is a graph showing throttle position versus power level in a hybrid auto mode of the turbine engine control system, according to several embodiments of the present disclosure.
FIG. 5D is a graph showing throttle position versus power level in a hybrid manual mode of the turbine engine control system, according to several embodiments of the present disclosure.
FIG. 6 is a schematic view of a turbine engine control system for the turbine engine of FIG. 1, according to another embodiment.
FIG. 7 is a flowchart of a method of controlling a turbine engine, according to several embodiments of the present disclosure.
FIG. 8 is an exemplary computing system, according to several embodiments of the present disclosure.

### DETAILED DESCRIPTION

Features, advantages, and embodiments of the present disclosure are set forth or apparent from a consideration of the following detailed description, drawings, and claims. Moreover, the following detailed description is exemplary and intended to provide further explanation without limiting the scope of the disclosure as claimed.

Various embodiments of the present disclosure are discussed in detail below. While specific embodiments are discussed, this is done for illustration purposes only. A person skilled in the relevant art will recognize that other components and configurations may be used without departing from the present disclosure.

As used herein, the terms "first," "second," "third," etc., may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "forward" and "aft" refer to relative positions within a turbine engine or vehicle, and refer to the normal operational attitude of the turbine engine or vehicle (e.g., an aircraft) with respect to a direction of travel. More particularly, forward and aft are used herein with reference to a direction of travel of the vehicle and a direction of propulsive thrust of the gas turbine engine.

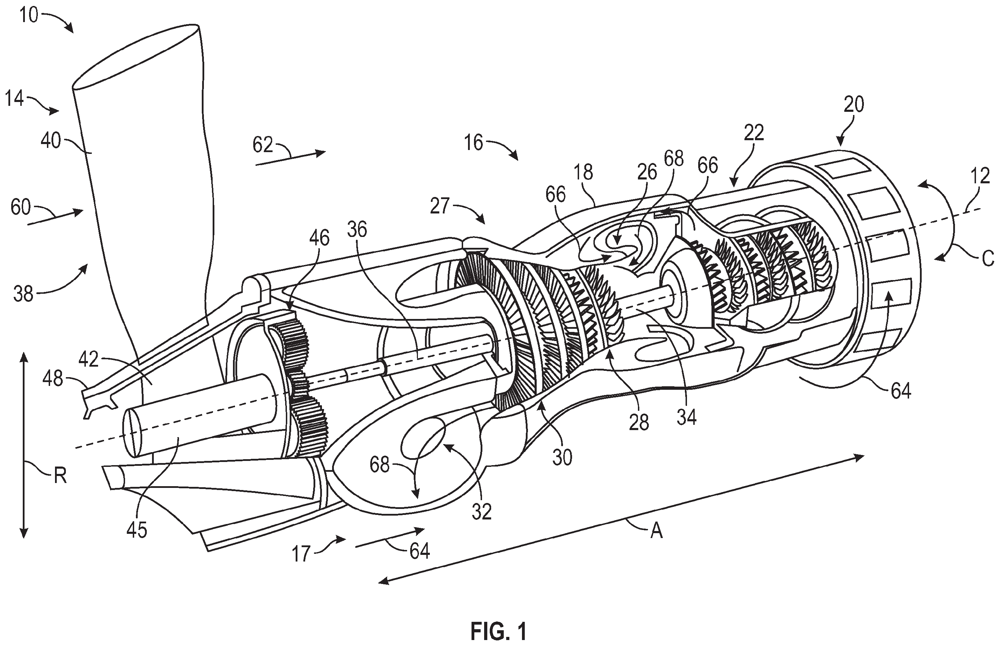

As used herein, "below" refers to a component being radially below another component in the orientation of the turbine engine shown in FIG. 1.

The terms "coupled," "fixed," "attached," "connected," and the like, refer to both direct coupling, fixing, attaching, or connecting, as well as indirect coupling, fixing, attaching, or connecting through one or more intermediate components or features, unless otherwise specified herein.

The singular forms "a," "an," and "the" include plural references unless the context clearly dictates otherwise.

As used herein, the terms "axial" and "axially" refer to directions and orientations that extend substantially parallel to a centerline of the turbine engine. Moreover, the terms "radial" and "radially" refer to directions and orientations that extend substantially perpendicular to the centerline of the turbine engine. In addition, as used herein, the terms "circumferential" and "circumferentially" refer to directions and orientations that extend arcuately about the centerline of the turbine engine.

As used herein, "top" refers to a highest or uppermost point, portion, or surface of a component in the orientations shown in the figures.

As used herein, "bottom" refers to a lowest or lowermost point, portion, or surface of a component in the orientations shown in the figures.

As used herein, "remote" or a "remote component" means a component that is discrete from a first component such that the component is free from mechanical coupling (e.g., direct or indirect) to the first component. The remote component may be communicatively or electrically coupled to the first component.

As used herein, a "propulsor" is a component that rotates and generates thrust. The propulsor can be a propeller. For example, the propulsor can be a propeller of a turboprop engine that is drivingly coupled to the turbo-engine such that rotation of the components of the turbo-engine causes the propulsor to rotate and to generate thrust. The propulsor can be an electric propulsor that is drivingly coupled to an electric machine such that the electric machine causes the propulsor to rotate and to generate thrust.

As used herein, the terms "low," "mid" (or "mid-level"), and "high," or their respective comparative degrees (e.g., "lower" and "higher", where applicable), when used with compressor, combustor, turbine, shaft, propulsor, or turbofan engine components, each refers to relative pressures, relative speeds, relative temperatures, or relative power outputs within a turbine engine unless otherwise specified. For example, a "low-power" setting defines the turbine engine, or the combustor, configured to operate at a power output lower than a "high-power" setting of the turbine engine or the combustor, and a "mid- power" setting defines the turbine engine, or the combustor, configured to operate at a power output higher than the "low-power" setting and lower than the "high-power" setting. The terms "low," "mid" (or "mid-level") or "high" may additionally, or alternatively, be relative to minimum allowable speeds, pressures, or temperatures. The terms "low," "mid" (or "mid-level") or "high" may be understood to be relative to minimum or maximum allowable speeds, pressures, or temperatures relative to normal, desired, steady state, etc., operation of the turbine engine. A mission cycle for a turbine engine includes, for example, a low-power operation, a mid-power operation, and a high-power operation. Low-power operation includes, for example, engine start, idle, taxiing, and approach. Mid-power operation includes, for example, cruise. High-power operation includes, for example, takeoff and climb.

The various power levels of the turbofan engine are defined as a percentage of a sea level static (SLS) maximum engine rated thrust. Low-power operation includes, for example, less than thirty percent (30%) of the SLS maximum engine rated thrust of the turbine engine. Mid-power operation includes, for example, thirty percent (30%) to eighty-five percent (85%) of the SLS maximum engine rated thrust of the turbine engine. High-power operation includes, for example, greater than eighty-five percent (85%) of the SLS maximum engine rated thrust of the turbine engine. The values of the thrust for each of the low-power operation, the mid-power operation, and the high-power operation of the turbine engine are exemplary only, and other values of the thrust can be used to define the low-power operation, the mid-power operation, and the high-power operation.

Approximating language, as used herein throughout the specification and claims, is applied to modify any quantitative representation that could permissibly vary without resulting in a change in the basic function to which it is related. Accordingly, a value modified by a term or terms, such as "about," "approximately," "generally," and "substantially" is not to be limited to the precise value specified. In at least some instances, the approximating language may correspond to the precision of an instrument for measuring the value, or the precision of the methods or the machines for constructing the components and/or the systems or manufacturing the components and/or the systems. For example, the approximating language may refer to being within a one, two, four, ten, fifteen, or twenty percent margin in either individual values, range(s) of values and/or endpoints defining range(s) of values.

Here and throughout the specification and the claims, range limitations are combined, and interchanged. Such ranges are identified and include all the sub-ranges contained therein unless context or language indicates otherwise. For example, all ranges disclosed herein are inclusive of the endpoints, and the endpoints are independently combinable with each other.

As noted above, turbine engines include a turbo-engine that provides power for rotating a propulsor (e.g., a propeller). The turbo-engine burns air and fuel to generate an exhaust gas flow that drives an aerodynamically coupled power turbine, or low-pressure turbine, that is further coupled to a set of propulsor blades of the propulsor via a propulsor shaft. In this sense, a speed of the turbo-engine indirectly affects a speed of the power turbine by providing torque to drive the propulsor, thus providing thrust.

The pitch of the propulsor blades can also be rotated on the propulsor shaft to provide additional thrust at the expense of increasing the torque demand of the turbine shaft. For instance, if the pitch of the propulsor blades is reduced, each propulsor blade rotates on the propulsor shaft such that the air resistance of the propulsor blade as the propulsor blade rotates about the propulsor shaft decreases, and, thus, reduces the torque demand for the propulsor shaft. In the instance when the turbo-engine speed is constant, the reduced torque demand of the propulsor results in an increased propulsor shaft rotational speed (RPM). Conversely, if the pitch of the propulsor blades is increased, each propulsor blade rotates on the propulsor shaft such that the air resistance of the propulsor blade as the propulsor blade rotates about the propulsor shaft increases, and, thus, increases the torque demand for the propulsor shaft. In the instance when the turbo-engine speed is constant, the increased torque demand of the propulsor results in a decreased propulsor shaft speed.

The present disclosure provides for a turbine engine (e.g., a turboprop engine) with a propulsor. The turbine engine includes an electric machine. In this way, the propulsor of the turbine engine can be powered electrically by the electric machine. Thus, the turbine engine is a hybrid-electric turbine engine and the propulsor can be powered by at least one of the turbo-engine or the electric machine during operation of the turbine engine. For example, the turbo-engine and the electric machine can both output power and torque to the propulsor for powering the propulsor and achieving a total power output of the turbine engine. The turbine engine includes a turbine engine control system for controlling a power output of the turbine engine.

Turbine engine control systems typically employ multiple throttle levers used by the pilot to adjust, respectively, the turbo-engine speed demand, i.e., the speed of the turbo-engine, the propulsor speed demand, e.g., via the pitch of the propulsor blades, and the electric machine power demand. In some instances, the multiple throttle levers include a first throttle lever that controls the turbo-engine power output, a second throttle lever that controls the electric machine power output, and a third lever that controls the pitch of the propulsor blades. This multiple throttle lever turbine engine control system allows for a variation of aircraft speed and torque demand during, for instance, takeoff, cruise, or reverse thrust operations. The propulsor is designed to operate at a constant speed, so a pilot would need to first adjust the turbo-engine speed to increase/decrease power with the first throttle lever, adjust the electric machine power output with the second throttle lever, and then adjust the propulsor blade pitch with the third throttle lever to maintain the proper propulsor speed. The propulsor is driven by a free turbine downstream of the turbo-engine, so when the turbo-engine speed or the electric machine speed increases, if the propulsor pitch remains constant, then the propulsor speed increases. The pilot needs to change the pitch to counter the change in speed resulting from the turbo-engine or the electric machine change. In this way, the pilot needs to adjust two or more throttle levers to control a power output split (e.g., a ratio of the power output from the turbo-engine and the power output from the electric machine) between the turbo-engine and the electric machine, as well as controlling a third throttle lever to control the pitch of the propulsor blades. This results in an increased workload for the pilot. An aircraft with two turbine engines would result in six throttle levers for the pilot to control, further increasing the workload for the pilot.

The present disclosure provides for an improved turbine engine control system that receives an input of a selected mode of a plurality of modes and controls the power output split between the turbo-engine and the electric machine, and, therefore, controls the torque split to the propulsor based on the selected mode. The plurality of modes includes a full turbo-engine mode, a full electric mode, an automatic hybrid-electric mode, and a manual hybrid-electric mode. The full turbo-engine mode includes a full power output and a full torque output (e.g., 100%) from the turbo-engine and 0% power output and torque output from the electric machine. The full electric mode includes a full power output and a full torque output (e.g., 100%) from the electric machine and 0% power output and torque output from the turbo-engine. The automatic hybrid-electric mode includes the turbine engine control system automatically varying the power output split (e.g., and the torque output split) between the turbo-engine and the electric machine during the various operating phases (e.g., idle, take-off, climb, cruise, descent, or taxi) of the turbine engine. The manual hybrid-electric mode allows a user (e.g., the pilot) to vary the power output split (e.g., and the torque output split) between the turbo-engine and the electric machine during the various operating phases of the turbine engine.

The plurality of modes can be selected and changed via one or more mode selector mechanisms. The mode selector mechanisms include buttons, knobs, switches, touchscreen button, or the like, for allowing the user to input the selected mode to the turbine engine control system. For example, the mode selector mechanisms can include a knob that can be switched between the plurality of modes. In one example, the mode selector mechanisms include a display (e.g., in the cockpit) that allows the user to interact (e.g., via a touchscreen, or the like) with the display to select the selected mode. In one example, the full turbo-engine mode, the automatic hybrid-electric mode, and the full electric mode can be selected using the knob, and the manual hybrid-electric mode can be selected using the display. The display can also include buttons for allowing the user to change the power output split between the turbo-engine and the electric machine. For example, as the power output from the turbo-engine is increased, the power output from the electric machine is proportionally decreased. Similarly, as the power output from the electric machine is increased, the power output from the turbo-engine is proportionally decreased. Thus, the total power output for the turbine engine is a summation of the power output from the turbo-engine and the power output from the electric machine.

The turbine engine control system also includes a single throttle lever input and controls the turbine engine speed, the propulsor speed, and the propulsor pitch angle based on the single throttle lever input and the selected mode to achieve the total power output. Thus, the turbine engine control system can control the power output from the turbo-engine and the electric machine, and the propulsor speed and the pitch based on the single throttle lever input. In this way, the propulsion system of the present disclosure requires only a selected mode and a single throttle lever to be actuated by the pilot to control the turbo-engine, the electric machine, and the propulsor, thus, reducing pilot workload, allowing the pilot to better focus attention on other needs.

Referring now to the drawings, FIG. 1 is a schematic, partial cutaway view of a turbine engine 10, according to an embodiment of the present disclosure. As shown in FIG. 1, the turbine engine 10 has a longitudinal centerline axis 12 and defines an axial direction A (extending parallel to the longitudinal centerline axis 12 provided for reference), a radial direction R that is normal to the axial direction A, and a circumferential direction C disposed about the axial direction A. In general, the turbine engine 10 is a turboprop engine that includes a propulsor section 14 and a turbo-engine 16 disposed downstream from the propulsor section 14. The propulsor section 14 is driven by the turbo-engine 16, as detailed further below.

The turbine engine 10 includes an air intake 17 aft of the propulsor section 14 and forward of the turbo-engine 16. The air intake 17 is a scoop inlet positioned radially outward from the longitudinal centerline axis 12. In the embodiment of FIG. 1, the air intake 17 is positioned at a radially bottom portion of the turbine engine 10 (e.g., below the longitudinal centerline axis 12 in the orientation shown in FIG. 1). For example, the air intake 17 is positioned below the propulsor section 14. The air intake 17 can be positioned at any radial position of the turbine engine 10 (e.g., on a side of the turbine engine 10 or on a radially top portion of the turbine engine 10). The air intake 17 directs air from the propulsor section 14 into the turbo-engine 16, as detailed further below.

The turbo-engine 16 includes, in serial flow relationship, a compressor 22, a combustor 26, and a turbine section 27. The turbo-engine 16 is substantially enclosed within an outer casing 18 that is substantially tubular and defines a radial inlet 20 at an axially aft end of the turbo-engine 16. As depicted schematically in FIG. 1, the combustor 26 is downstream of the compressor 22. The turbine section 27 is downstream of the combustor 26 and includes a high-pressure (HP) turbine 28 followed downstream by a low-pressure (LP) turbine 30. The turbo-engine 16 further includes an exhaust section 32 that is downstream of the turbine section 27, a high-pressure (HP) shaft 34 or a spool, and a low-pressure (LP) shaft 36. The HP shaft 34 drivingly connects the HP turbine 28 to the compressor 22. The HP turbine 28 and the compressor 22 rotate in unison through the HP shaft 34. The LP shaft 36 drivingly connects the LP turbine 30 to the propulsor section 14. The LP turbine 30 and the propulsor section 14 rotate in unison through the LP shaft 36. The compressor 22, the combustor 26, the turbine section 27, and the exhaust section 32 together define a core air flow path of the turbine engine 10.

The propulsor section 14 includes a propulsor 38 having a plurality of propulsor blades 40 (only one shown in FIG. 1) coupled to a disk 42 in a spaced apart manner. The propulsor 38 is a propeller. The propulsor blades 40 extend outwardly from the disk 42 generally along the radial direction R. The propulsor blades 40 and the disk 42 are together rotatable about the longitudinal centerline axis 12 via a propulsor shaft 45 that is powered by the LP shaft 36 across a power gearbox, also referred to as a gearbox assembly 46. In this way, the propulsor 38 is drivingly coupled to the turbo-engine 16 (e.g., to the LP turbine 30). The gearbox assembly 46 includes a plurality of gears for adjusting the rotational speed of the propulsor shaft 45 and, thus, the propulsor 38 relative to the LP shaft 36. In some embodiments, the propulsor 38 is a variable pitch propulsor such that each propulsor blade 40 is rotatable relative to the disk 42 about a pitch axis by virtue of the propulsor blades 40 being operatively coupled to an actuator configured to collectively vary the pitch of the propulsor blades 40 in unison. The disk 42 is covered by a rotatable propulsor hub 48 aerodynamically contoured to promote an airflow through the plurality of propulsor blades 40.

During operation of the turbine engine 10, a volume of air 60 passes through the propulsor blades 40 of the propulsor 38. As the volume of air 60 passes across the plurality of propulsor blades 40, a first portion of air, referred to as bypass air 62, is directed outside of the turbo-engine 16, and a second portion of air, referred to as core air 64, is directed into the air intake 17. The air intake 17 directs the core air 64 axially aft towards the turbo-engine 16 and into the radial inlet 20.

The turbo-engine 16 is a reverse flow engine such that the core air 64 flows through the turbo-engine 16 from an aft end of the turbo-engine 16 to a forward end of the turbo-engine 16. In this way, the turbine engine 10 is referred to as a reverse flow turbine engine. The radial inlet 20 directs the core air 64 downstream to the compressor 22. In the compressor 22, a pressure of the core air 64 is increased, generating compressed air 66, and the compressed air 66 is routed into the combustor 26, where the compressed air 66 is mixed with fuel and burned to generate combustion gases 68. In the embodiment of FIG. 1, the combustor 26 is a reverse flow combustor such that the compressed air 66 flows from the compressor 22, around the combustor 26, and enters the combustor 26 at a forward end of the combustor 26. In this way, the compressed air 66 flows aft within the combustor 26 and the combustion gases 68 are then directed from the combustor 26 forward to the turbine section 27.

In the turbine section 27, the combustion gases 68 are routed into the HP turbine 28 and expanded through the HP turbine 28 where a portion of thermal energy and kinetic energy from the combustion gases 68 is extracted via one or more stages of HP turbine stator vanes and HP turbine rotor blades that are coupled to the HP shaft 34. This causes the HP shaft 34 to rotate, supporting operation of the compressor 22 (self-sustaining cycle). In this way, the combustion gases 68 do work on the HP turbine 28. The combustion gases 68 are then routed into the LP turbine 30 and expanded through the LP turbine 30. Here, a second portion of the thermal energy and the kinetic energy is extracted from the combustion gases 68 via one or more stages of LP turbine stator vanes and LP turbine rotor blades that are coupled to the LP shaft 36. This causes the LP shaft 36 to rotate, causing the propulsor 38 to rotate (self-sustaining cycle) via the gearbox assembly 46. In this way, the combustion gases 68 do work on the LP turbine 30. The combustion gases 68 are subsequently routed through the exhaust section 32 and out of the turbo-engine 16 to provide propulsive thrust.

The turbine engine 10 depicted in FIG. 1 is by way of example only. In other exemplary embodiments, the turbine engine 10 may have any other suitable configuration. For example, in other exemplary embodiments, the propulsor 38 may be configured in any other suitable manner (e.g., as a fixed pitch propulsor) and further may be supported using any other suitable propulsor frame configuration. Moreover, in other exemplary embodiments, any other suitable number or configuration of compressors, turbines, shafts, or a combination thereof may be provided. In certain exemplary embodiments, the turbine engine 10 of FIG. 1 may be utilized to drive a propeller of a helicopter, or may be utilized in aeroderivative applications. Additionally, in other exemplary embodiments, the turbine engine 10 may include any other suitable type of combustor, and may not include the exemplary reverse flow combustor depicted.

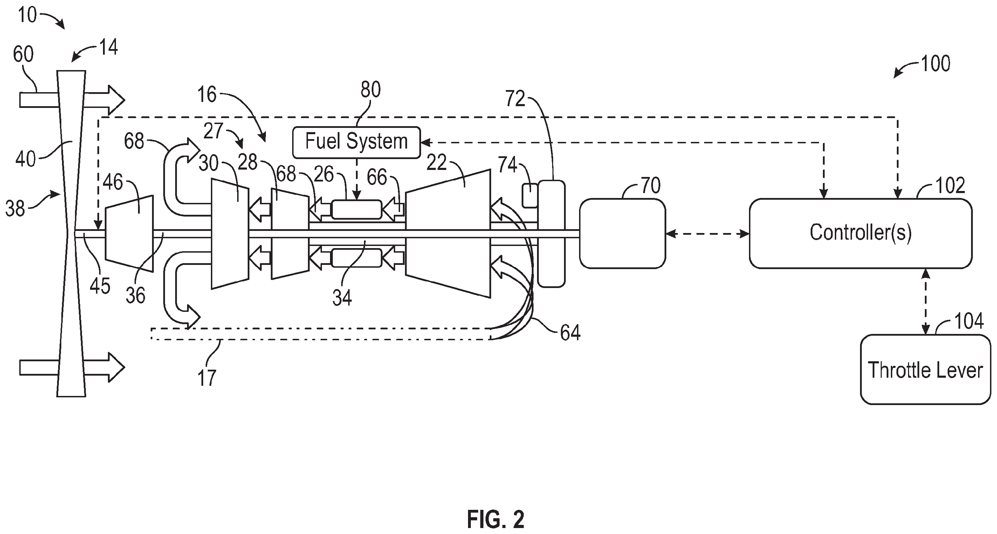

FIG. 2 is a schematic view of the turbine engine 10 having a turbine engine control system 100, according to the present disclosure. As shown in FIG. 2, the turbine engine 10 includes an electric machine 70 that is drivingly coupled to the LP shaft 36. In this way, the turbine engine 10 is a hybrid electric turbine engine. The electric machine 70 is positioned at an aft end of the turbine engine 10. The electric machine 70 may be positioned anywhere on the turbine engine 10. In some embodiments, the electric machine 70 is coupled to the LP shaft 36 via an electric machine gearbox (not shown in this view).

The electric machine 70 can be used in many different power configurations. In one form, the electric machine is configured to extract power from the LP shaft 36 when the electric machine 70 operates as a generator. The extraction of mechanical power from the LP shaft 36 and conversion to electric power can be used to charge an on-board power storage device such as a battery, or alternatively, to provide power to another electrical device (e.g., an electric motor, an electrical accessory on an aircraft, etc.). In other forms, the electric machine 70 can be used as a motor to provide power to the LP shaft 36 to supplement power extracted by the LP turbine 30 from the combustion gases 68. In these forms, the electric machine 70 can be configured to provide a minimum of 10% of supplemental thrust to the turbine engine 10, a minimum of 20% of supplemental thrust to the turbine engine 10, and up to 40% of supplemental thrust to the turbine engine 10 in various embodiments. In still other forms, the electric machine 70 can be configured to power to drive 100% of thrust from the propulsor section 14. A scenario in which the electric machine 70 provides all power to the propulsor section 14 can include shutdown of the turbine engine 10. In one non-limiting example of the turbine engine 10 being shut down, upon or near landing, the turbine engine 10 can be commanded to shut down and the electric machine 70 used to drive further propulsor thrust requirements, such as, for example, power when the propulsor section 14 is configured in reverse pitch to aid in slowing the aircraft.

A battery or other secondary power source (e.g., a fuel cell) can be used to provide power to the electric machine 70 when the electric machine 70 is operated as a motor. The supplementation of power by the electric machine 70 to the LP shaft 36 in this manner can be transitory or steady state, depending on the control requirements requested of the turbine engine 10. For example, in those operating conditions in which power output of the turbine engine 10 lags behind a commanded power, the electric machine 70 can provide near instantaneous supplemental power to the LP shaft 36 to provide on-condition power output until the turbine engine 10 achieves a steady state operating condition at the higher output power. In still further forms, the electric machine 70 can be operated as a motor in some portions of operation of the turbine engine 10, and as a generator in other portions of operation of the turbine engine 10, along the lines of any of the variations discussed herein.

The embodiment in FIG. 2 includes an accessory gearbox assembly (AGB) 72 located aft of the compressor 22 and is coupled to a starter motor 74. The starter motor 74 is coupled to the HP shaft 34 via the AGB 72 such that, during a start sequence of the turbine engine 10, the starter motor 74 can be used to impart rotational power via the AGB 72 to the HP shaft 34. In the illustrated embodiment, the AGB 72 is depicted as being co-axial with the HP shaft 34 and the LP shaft 36 (the AGB 72 is drivingly coupled to the HP shaft 34, but not otherwise drivingly coupled with the LP shaft 36). To provide such a coaxial relationship between the HP shaft 34 and the AGB 72, in one form, the AGB 72 is a planetary gear system in which the HP shaft 34 is coupled to a sun gear of the planetary gear system. In other forms, a central gear of the AGB 72 is coupled via one or more idler gears to the starter motor 74. Other forms are also contemplated to permit a co-axial relationship between the AGB 72 and the HP shaft 34. In other forms, however, the AGB 72 need not be co-axial with the HP shaft 34.

The turbine engine 10 also includes a fuel system 80 for providing the fuel to the combustor 26. For example, the fuel system 80 can include a fuel tank for storing the fuel, one or more fuel lines in flow communication with the fuel tank and the combustor 26, and a fuel pump for delivering the fuel from the fuel tank to the combustor 26 through the one or more fuel lines.

The turbine engine control system 100 includes one or more controllers 102 and a single input device, also referred to as a single throttle lever 104. The one or more controllers 102 are in two-way communication with the turbine engine 10 (e.g., the turbo-engine 16 and the propulsor 38), the electric machine 70, and the single throttle lever 104 for controlling aspects of the turbine engine 10, the electric machine 70, and the single throttle lever 104. The one or more controllers 102, or components thereof, may be located onboard the turbine engine 10, onboard the aircraft, or can be located remote from each of the turbine engine 10 and the aircraft (e.g., on the ground or on a remote propulsor).

The one or more controllers 102 may include a standalone controller or may include a plurality of controllers to operate various systems of the turbine engine 10 and the electric machine 70. In this embodiment, the one or more controllers 102 are computing devices having one or more processors and a memory. The one or more processors can be any suitable processing device, including, but not limited to, a microprocessor, a microcontroller, an integrated circuit, a logic device, a programmable logic controller (PLC), an application specific integrated circuit (ASIC), or a Field Programmable Gate Array (FPGA). The memory can include one or more computer-readable media, including, but not limited to, non-transitory computer-readable media, a computer readable non-volatile medium (e.g., a flash memory), a RAM, a ROM, hard drives, flash drives, or other memory devices.

The memory can store information accessible by the one or more processors, including computer-readable instructions that can be executed by the one or more processors. The instructions can be any set of instructions or a sequence of instructions that, when executed by the one or more processors, cause the one or more processors and the one or more controllers 102 to perform operations. The one or more controllers 102 and, more specifically, the one or more processors are programmed or configured to perform these operations, such as the operations discussed further below. In some embodiments, the instructions can be executed by the one or more processors to cause the one or more processors to complete any of the operations and functions for which the one or more controllers 102 are configured, as will be described further below. The instructions can be software written in any suitable programming language or can be implemented in hardware. Additionally, or alternatively, the instructions can be executed in logically or virtually separate threads on the processors. The memory can further store data that can be accessed by the one or more processors.

The technology discussed herein makes reference to computer-based systems and actions taken by, and information sent to and from, computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

The single throttle lever 104 is a single, pilot-controllable, power control lever for controlling a power level of the turbine engine 10 and the electric machine 70. In this way, the turbine engine control system 100 includes a single throttle lever 104 (e.g., one throttle lever) for controlling aspects of both the turbine engine 10 and the electric machine 70. The single throttle lever 104 may be a pilot-accessible mechanical lever, for instance, located in a cockpit or a flight deck of an aircraft, that allows the pilot to provide input to control the turbine engine control system 100 by physically moving the single throttle lever 104 through a predetermined physical range of motion corresponding to the operation range of the turbine engine control system 100. The physical range of motion of the single throttle lever 104 may additionally include a first portion or a first range, wherein moving the single throttle lever 104 into the first portion corresponds to a forward movement of the aircraft, and a second portion or a second range, wherein moving the single throttle lever 104 into the second portion corresponds to a rearward movement of the aircraft.

The single throttle lever 104 can include a positional sensor that detects or converts the position of the single throttle lever 104, relative to the operational range of the single throttle lever 104 motion (in both the first position and the second position), and generates an output signal (e.g., a control signal) indicative of the position of the single throttle lever 104. For example, the single throttle lever 104 can include a lever anchored at a lever pivot, and rotatable over 88°, wherein the foremost 44° of rotation (relative to the pilot) may provide the first portion in the range of motion, while the rearmost 44° may provide the second portion, or reverse, range of motion. The positional sensor, in turn, generates a control signal that ranges from -44° to +44°. The 0° to 44° range defines the first position (corresponding to forward movement) and the 0° to -44° range defines the second position (corresponding to rearward movement). The single throttle lever 104 can be rotatable over any range, as desired, for generating a control signal for controlling the turbine engine 10 or portions thereof. While a lever is described for the single throttle lever 104, additional input devices allowing for pilot input can be used, such as a dial or a knob. Further, the single throttle lever 104 may be remote from the aircraft (e.g., remote controlled). Additionally, particular positions of the single throttle lever 104 may define different flight regimes, such as taxi, cruise, and takeoff. For example, a position of the single throttle lever 104 between 0° and 20° represents a taxi operation, a position of the single throttle lever 104 between 21° and 30° represents a cruise operation, and a position of the single throttle lever 104 at 44° represents a takeoff operation.

In operation, the turbine engine control system 100 receives an input (e.g., the control signal) from the single throttle lever 104 and controls at least one of the turbine engine 10 (e.g., at least one of the turbo-engine 16 or the propulsor 38) or the electric machine 70 based on the input from the single throttle lever 104. In particular, the turbine engine control system 100 controls a rotational speed of the turbo-engine 16 and at least one of a rotational speed of the propulsor 38, a pitch of the plurality of propulsor blades 40, or a torque of the propulsor 38. In some embodiments, the turbine engine control system 100 controls the fuel system 80 to increase or to decrease a fuel flow rate of the fuel to the combustor 26 to control the rotational speed of the turbo-engine 16. In some embodiments, the turbine engine control system 100 controls the electric machine 70 to control the propulsor 38. For example, the one or more controllers 102 control the electric machine 70 to increase or to decrease an amount of power from the electric machine 70 to the propulsor 38 for controlling the rotational speed or the torque of the propulsor 38.

To control the turbine engine 10, the propulsor 38, and the electric machine 70, the one or more controllers 102 receive a position input from the single throttle lever 104. The one or more controllers 102 then convert the position input into at least one of a turbine engine setting or a propulsor setting. The turbine engine setting includes a rotational speed of the turbo-engine 16. The propulsor setting includes at least one of a rotational speed of the propulsor 38, a pitch of the plurality of propulsor blades 40, or a torque of the propulsor 38. The one or more controllers 102 then control at least one of a rotational speed of the turbo-engine 16, a rotational speed of the propulsor 38, a pitch of the plurality of propulsor blades 40, or a torque of the propulsor 38. For example, the one or more controllers 102 control the rotational speed of the turbo-engine 16 based on the turbine engine setting. The one or more controllers 102 control at least one of the rotational speed of the propulsor 38, the pitch of the plurality of propulsor blades 40, or the torque of the propulsor 38 based on the propulsor setting.

In one embodiment, the one or more controllers 102 determine the turbine engine setting and the propulsor setting based on one or more speed maps. For example, the one or more controllers 102 include a turbo-engine speed map and a propulsor speed map. The turbine engine speed map and the propulsor speed map each operates as a demand map, or a look-up table, and may be configured with predetermined profiles, dynamic profiles, or setting values, for instance, via an implementation of an algorithm. In particular, the speed maps correlate various position inputs from the single throttle lever 104 to the turbine engine setting and the propulsor setting. Each of the turbine engine speed map and the propulsor speed map may additionally define limitations to aircraft operation. For example, the turbine engine speed map and the propulsor speed map may provide limited maximum or minimum thrust or speed utilized during taxi, cruise, or takeoff. In another example, the turbine engine speed map and the propulsor speed map may define a maximum or a minimum turbine engine 10 speed and propulsor 38 speed and pitch utilized during ground idle. In another example, the propulsor speed map may define a constant propulsor speed with an adjusting propulsor blade pitch value. Alternatively, the propulsor speed map may provide a constant propulsor blade pitch value with a varying propulsor speed. In yet another example, the propulsor speed map may provide a varied speed or a varied pitch in either a forward thrust operation or a reverse thrust operation. In even yet another example, the propulsor speed map may employ multiple maps, wherein, for instance, a forward control signal utilizes a forward propulsor speed map while a reverse control signal utilizes a reverse propulsor speed map. In even yet another example, the turbine engine speed map and the propulsor speed map may be configured to prevent excess or undesirable temperature conditions on the turbo-engine 16, and over-torque or overspeed on the propulsor 38.

The turbine engine speed map and the propulsor speed map may additionally define profiles of operation, wherein, for example, the turbine engine speed map and the propulsor speed map are configured to provide setting values for optimal aircraft efficiency, turbine engine efficiency, or propulsor efficiency. For example, the propulsor speed map may be configured to provide an optimized propulsor speed for a corresponding turbine engine speed map value. The optimized profiles may additionally take into account additional sensor values, for instance, relating to air speed, altitude, etc., to provide an optimal turbine engine 10 speed, an optimal propulsor 38 speed and propulsor blade 40 pitch, for example, for an optimized fuel efficiency profile, an optimized thrust profile, an optimized audible profile (i.e., by controlling pitch of the propulsor blades 40), or an optimized flight time efficiency profile. The optimization profiles may be further delineated by a given control signal from the single throttle lever 104. The optimized profiles may be user-selectable by the pilot.

Additionally, or alternatively, at least one of the turbine engine speed map or the propulsor speed map may be configured to provide for a linear thrust response, that is, a linear thrust relative to the position of the single throttle lever 104. The thrust response may be linear in a forward thrust operation or a reverse thrust operation. In this sense, "linear" may refer to the overall thrust that, as explained above, is affected by the configurations of the turbine engine 10, the propulsor 38, and the propulsor blades 40. Thus, a linear thrust may not be proportionally related to, for example, only a change in one component (e.g., the turbo-engine 16, the propulsor 38, or the propulsor blades 40) of the configuration. Additionally, "linear" may define a maximum allowable change in setting values, regardless of how much change or how quickly a change was requested via the single throttle lever 104. In this instance, a "linear" thrust response may only allow for a 1% increase in turbine engine power per second. In another sense, "linear" may define a feedback response from a perspective of the pilot. For instance, a pilot may define a feeling of "linear" thrust response as, for example, a 1% increase in thrust for one second, followed by a 2% increase in thrust for three seconds. Further, this thrust response may be different depending on the status, or flight regime, of the aircraft (e.g., taxi, cruise, takeoff, etc.).

Each of the turbine engine speed map and the propulsor speed map receives the control signal from the single throttle lever 104, and the one or more controllers 102 determine the turbine engine setting (e.g., the turbo-engine setting and the propulsor setting) in response to, or as a function of, the received input. In some embodiments, the one or more controllers 102 determine a desired turbine engine setting (e.g., a desired turbo-engine setting and a desired propulsor setting) based on the received input from the single throttle lever 104. The one or more controllers 102 then compare the desired turbine engine setting to an actual turbine engine setting. For example, the one or more controllers 102 determine the actual rotational speed of the turbo-engine 16, the actual rotational speed of the propulsor 38, the actual pitch of the propulsor blades 40, and the actual torque of the propulsor 38. The one or more controllers 102 then control the turbo-engine 16 and the propulsor 38 based on the comparison. For example, to speed up the propulsor 38, the one or more controllers 102 generate a positive value that, in turn, decreases the propulsor 38 pitch, thus increasing the rotational speed of the propulsor 38. Likewise, to slow down the propulsor 38, the one or more controllers 102 generate a negative value that, in turn, increases the propulsor 38 pitch, thus decreasing the rotational speed of the propulsor 38. In instances when the control signal is static, the operation of speeding up or slowing down of the propulsor 38 will ultimately equalize at a point wherein the one or more controllers 102 generate a neutral value, at which the pitch of the propulsor 38 is neither increased nor decreased. The one or more controllers 102 can similarly control the turbo-engine 16 and the propulsor 38 during a reverse thrust operation.

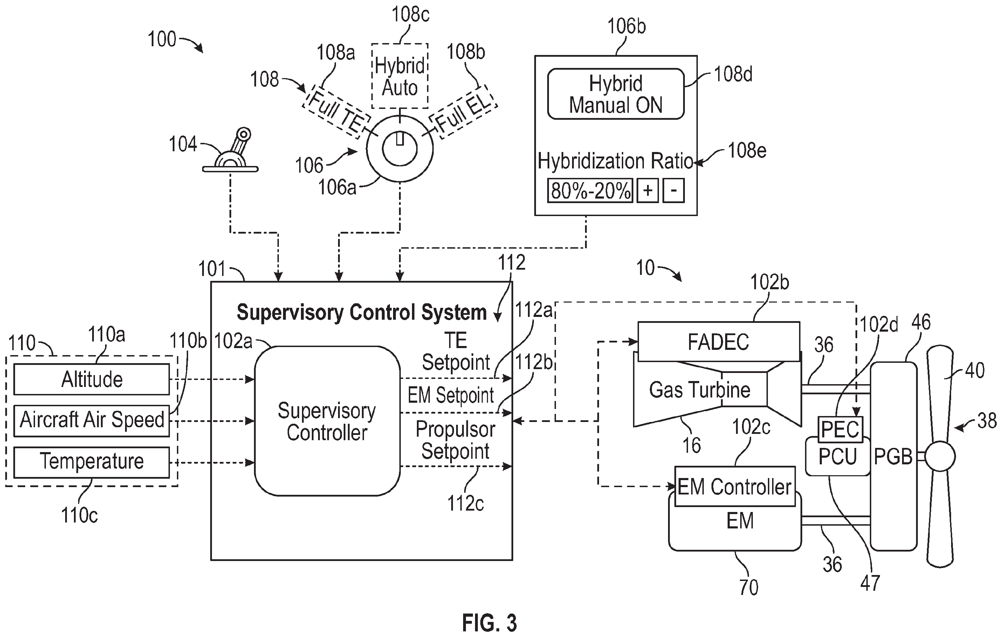

FIG. 3 is a schematic view of the turbine engine control system 100, according to the present disclosure. As shown in FIG. 3, the propulsor 38 includes a propulsor control unit (PCU) 47 that includes one or more actuators for controlling the pitch of the propulsor blades 40. The turbine engine control system 100 includes a supervisory control system 101. The one or more controllers 102 include a supervisory controller 102a, a turbine engine controller 102b, also referred to as a Full Authority Digital Engine Control (FADEC), an electric machine (EM) controller 102c, and a propulsor electronic controller (PEC) 102d. The supervisory controller 102a is associated with the supervisory control system 101, the turbine engine controller 102b is associated with the turbo-engine 16 for controlling aspects of the turbo-engine 16, the EM controller 102c is associated with the electric machine 70 for controlling aspects of the electric machine 70, and the PEC 102d is associated with the PCU 47 for controlling aspects of the propulsor 38. While the supervisory controller 102a, the turbine engine controller 102b, the EM controller 102c, and the PEC 102d are shown as separate components, the controllers 102a, 102b, 102c, and 102d can be embodied in a single controller 102, or various combinations of different controllers.

The turbine engine control system 100 includes one or more mode selector switch mechanisms 106. The one or more mode selector switch mechanisms 106 include buttons, switches, touch screen icons, or the like, for allowing a user (e.g., a pilot) to select one of a plurality of modes 108 of the turbine engine control system 100. The mode selector switch mechanisms 106 are in communication with the one or more controllers 102 (e.g., the supervisory controller 102a) for sending a mode signal to the one or more controllers 102 that indicates a selected mode of a plurality of modes 108. The one or more controllers 102 control a power output split (e.g., a torque split to the propulsor 38) between the turbine engine 10 and the electric machine 70 based on the selected mode, as detailed further below. The plurality of modes 108 includes a full turbo-engine mode 108a ("Full TE"), a full electric mode 108b ("Full EL"), an automatic hybrid-electric mode 108c ("Hybrid Auto"), and a manual hybrid-electric mode 108d ("Hybrid Manual").

In FIG. 3, the mode selector switch mechanisms 106 include a mode selector knob 106a and a display 106b. The mode selector knob 106a is a switch knob that has a plurality of positions. Each position of the plurality of positions corresponds to one of the plurality of modes 108. In particular, the mode selector knob 106a includes a full turbo-engine mode position, a full electric mode position, and an automatic hybrid-electric mode position. The display 106b can be located on the aircraft, for example, in a cockpit of the aircraft, or can be located remote from the aircraft (e.g., on the ground). The display 106b can include a touchscreen such that the user can interact with the display 106b and input a selection using one or more buttons on the display 106b. In particular, the display 106b can include a manual hybrid-electric mode button and one or more hybridization ratio buttons 108e. While a mode selector knob 106a and a display 106b are detailed herein, the mode selector switch mechanisms 106 can include any type of switch, knob, button, touchscreen buttons, or the like, for inputting a mode selection of one of the plurality of modes 108 to the controllers 102. For example, the hybrid manual mode 108d selector may be implemented as a physical button or switch and the hybridization ratio may be selectable through a physical slider or a physical knob. In this way, the mode selector switch mechanisms 106 include a plurality of inputs corresponding to the plurality of modes 108.

In the full turbo-engine mode 108a, the controllers 102 control the turbine engine 10 and the electric machine 70 such that 100% of the power output (e.g., the power to the propulsor 38) is from the turbo-engine 16 and 0% of the power output is from the electric machine 70. In this way, only the turbo-engine 16 provides power to the propulsor 38. In the full electric mode 108b, the controllers 102 control the turbine engine 10 and the electric machine 70 such that 0% of the power output is from the turbo-engine 16 and 100% of the power output is from the electric machine 70. In this way, only the electric machine 70 provides power to the propulsor 38. In the automatic hybrid-electric mode 108c, the controllers 102 control the turbine engine 10 and the electric machine 70 such that the power output from each of the turbo-engine 16 and the electric machine 70 is greater than 0% and less than 100%. The controllers 102 can vary the power output split between the turbo-engine 16 and the electric machine 70 based on operating conditions (e.g., high-power operation, mid-power operation, or low-power operation), as detailed further below.

In the manual hybrid-electric mode 108d, the user (e.g., the pilot) can input the power output split between the turbo-engine 16 and the electric machine 70. In particular, the user can select the manual hybrid-electric mode 108d by actuating the manual hybrid-electric mode button on the display 106b. Once the manual hybrid-electric mode 108d is selected, the user can input the hybridization ratio that is the power output split between the turbo-engine 16 and the electric machine 70. For example, the display 106b can have buttons for increasing or decreasing the power output of the turbo-engine 16, the electric machine 70, or both the turbo-engine 16 and the electric machine 70. In this way, the user can control the power output split between the turbo-engine 16 and the electric machine 70 such that the power output from each of the turbo-engine 16 and the electric machine 70 is greater than 0% and less than 100%. In FIG. 3, the hybridization ratio is shown as 80% power output from the turbo-engine 16 and 20% power output from the electric machine 70.

In the automatic hybrid-electric mode 108c, the controllers 102 receive one or more ambient condition inputs 110 and control the power output split between the turbo-engine 16 and the electric machine 70 based on the ambient condition inputs 110. The ambient condition inputs 110 include, for example, altitude 110a, aircraft air speed 110b, and temperature 110c. The altitude 110a is an altitude of the turbine engine 10 (e.g., the aircraft on which the turbine engine 10 is mounted) and is detected by one or more altitude sensors, such as, for example, pressure sensors, radars, or the like. The aircraft air speed 110b is a speed of the aircraft on which the turbine engine 10 is mounted and is detected by one or more speed sensors, such as, for example, inductive sensors, magnetic reluctance, Hall effect sensors, or the like. The temperature 110c is an ambient temperature about the turbine engine 10 and is detected by one or more temperature sensors. The controllers 102 then determine a plurality of turbine engine setpoints 112 for controlling the power output split between the turbo-engine 16 and the electric machine 70. The turbine engine setpoints 112 include a turbo-engine (TE) setpoint 112a and an electric machine (EM) setpoint 112b. The turbo-engine setpoint 112a is the value of the power output for the turbo-engine 16. The EM setpoint is the value of the power output for the electric machine 70.

Based on the ambient condition inputs 110 and the operating conditions of the turbine engine 10, the controllers 102 can determine the turbo-engine setpoint 112a and the EM setpoint 112b. In particular, the controllers 102 receive the ambient condition inputs 110, determine the turbine engine setpoints 112, and output the turbine engine setpoints 112 to the turbo-engine 16 and the electric machine 70. The supervisory controller 102a receives the ambient condition inputs 110 and outputs the turbine engine setpoints 112 to the turbine engine controller 102b and the EM controller 102c. In particular, the supervisory controller 102a outputs the turbo-engine setpoint 112a to the turbine engine controller 102b and outputs the EM setpoint 112b to the EM controller 102c. The turbine engine controller 102b then controls the turbo-engine 16 to achieve the power output for the turbo-engine 16 based on the turbo-engine setpoint 112a. The EM controller 102c controls the electric machine 70 to achieve the power output for the electric machine 70 based on the EM setpoint 112b. In this way, the controllers 102 automatically control the power output split between the turbo-engine 16 and the electric machine 70 when the turbine engine 10 is in the automatic hybrid-electric mode 108c.

In one example, when the altitude 110a is eight thousand five hundred feet (8,500 ft.), the aircraft airspeed 110b is one hundred twenty knots (120 kts.), the temperature 110c is thirty degrees Celsius (30°C), and the turbine engine 10 is in a high-power condition (e.g., a takeoff power rating), the turbo-engine setpoint 112a is fifty-two percent (52%) and the EM setpoint 112b is thirty percent (30%) of the maximum rated thrust of the turbine engine 10. In another example, when the altitude 110a is twenty-five thousand feet (25,000 ft.), the aircraft airspeed 110b is two hundred fifty knots (250 kts.), the temperature 110c is thirty degrees Celsius (30°C), and the turbine engine 10 is in a mid-power condition (e.g., a cruise power rating), the turbo-engine setpoint 112a is ten percent (10%) and the EM setpoint 112b is thirty percent (46%) of the maximum rated thrust of the turbine engine 10. The values used herein are exemplary only and the turbine engine setpoints 112 can include any values corresponding to any values of the ambient condition inputs 110.

The turbine engine setpoints 112 also include a propulsor setpoint 112c. The propulsor setpoint 112c is a value of the pitch for the propulsor blades 40. Based on the ambient condition inputs 110 and the operating conditions of the turbine engine 10, the controllers 102 can determine the propulsor setpoint 112c. In particular, the controllers 102 receive the ambient condition inputs 110, determine the propulsor setpoint 112c, and output the propulsor setpoint 112c to the PCU 47. For example, the supervisory controller 102a receives the ambient condition inputs 110 and outputs the propulsor setpoint 112c to the PEC 102d. The PEC 102d then controls the propulsor 38 to achieve the pitch for the propulsor blades 40 based on the propulsor setpoint 112c. In particular, the PEC 102d controls the PCU 47 to actuate the propulsor blades 40 to rotate about a blade pitch axis to achieve the pitch for the propulsor blades 40 based on the propulsor setpoint 112c.

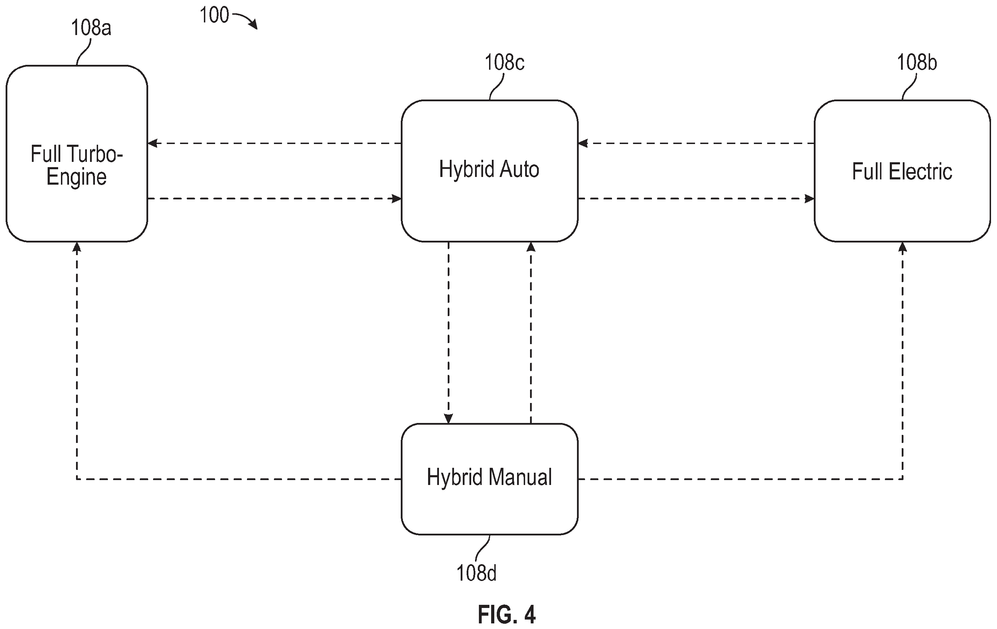

FIG. 4 is a schematic diagram of a mode selection process of the turbine engine control system 100, according to the present disclosure. As shown by the dashed arrows in FIG. 4, the controllers 102 prevent the turbine engine control system 100 from switching directly between the full turbo-engine mode 108a and the full electric mode 108b. In this way, controllers 102 prevent the power output from the turbo-engine 16 from switching directly from 100% to 0% and prevent the power output from the electric machine 70 from switching directly from 0% to 100%. Likewise, the controllers 102 prevent the power output from the electric machine 70 from switching directly from 100% to 0% and prevent the power output from the turbo-engine 16 from switching directly from 0% to 100%. Such a configuration prevents overly stressing the turbo-engine 16 and the electric machine 70.

In particular, the controllers 102 can switch from the full turbo-engine mode 108a to the automatic hybrid-electric mode 108c and the manual hybrid-electric mode 108d. The controllers 102 cannot switch from full turbo-engine mode 108a to the full electric mode 108b. The controllers 102 can switch from the full electric mode 108b to the automatic hybrid-electric mode 108c and the manual hybrid-electric mode 108d. The controllers 102 cannot switch from full electric mode 108b to the full turbo-engine mode 108a. The controllers 102 can switch from the automatic hybrid-electric mode 108c to the full turbo-engine mode 108a, the full electric mode 108b, and the manual hybrid-electric mode 108d. The controllers 102 can switch from the manual hybrid-electric mode 108d to the full turbo-engine mode 108a, the full electric mode 108b, and the automatic hybrid-electric mode 108c. Such a configuration of the mode selection process allows a smooth transition from 100% turbo-engine or from 100% electric to less than 100% turbo-engine or less than 100% electric. In this way, the controllers 102 prevent large spikes in the change of the power output split between the turbo-engine 16 and the electric machine 70. In some embodiments, the controllers 102 can switch between the various modes by slowly decreasing or increasing the power levels rather than abrupt changes between the turbo-engine 16 and the electric machine 70.

In the embodiment of FIGS. 3 and 4, the selection process detailed above is achieved by separating the full turbo-engine mode 108a and the full electric mode 108b on the one or more mode selector switch mechanisms 106. In particular, the automatic hybrid-electric mode 108c is positioned between the full turbo-engine mode 108a and the full electric mode 108b on the mode selector knob 106a. In this way, the user can only actuate the mode selector knob 106a from the full turbo-engine mode 108a to the automatic hybrid-electric mode 108c or from the full electric mode 108b to the automatic hybrid-electric mode 108c, and from the automatic hybrid-electric mode 108c to the full turbo-engine mode 108a or to the full electric mode 108b. Thus, the mode selector knob 106a cannot physically be moved from the full turbo-engine mode 108a directly to the full electric mode 108b (or vice-versa) without first going through the automatic hybrid-electric mode 108c. The manual hybrid-electric mode 108d can only be activated on the display 106b when the mode selector knob 106a is on the automatic hybrid-electric mode 108c. In some embodiments, the manual hybrid-electric mode 108d can separately be activated on the display 106b when the mode selector knob 106a is on any of the full turbo-engine mode 108a, the full electric mode 108b, or the automatic hybrid-electric mode 108c.

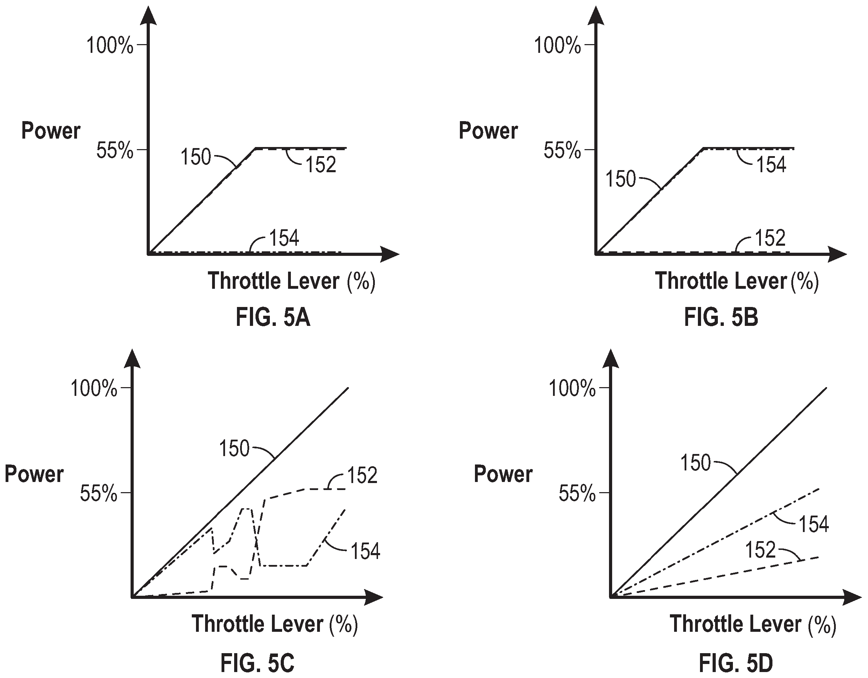

FIGS. 5A to 5D show exemplary graphs of throttle position versus power output for the plurality of modes 108. The graphs are exemplary only to illustrate each of the plurality of modes 108, and the throttle position and power levels can include different values than shown in FIGS. 5A to 5D. As shown in FIGS. 5A to 5D, a total power output 150 of the turbine engine 10 is proportional to a position, as a percentage of a total extent, of the single throttle lever 104. In particular, as the position of the single throttle lever 104 increases, the total power output 150 increases. The total power output 150 is a sum of a power output 152 from the turbo-engine 16 and a power output 154 from the electric machine 70.

FIG. 5A is a graph showing the throttle position versus the power output in the full turbo-engine mode 108a of the turbine engine control system 100, according to the present disclosure. As shown in FIG. 5A, the power output 152 from the turbo-engine 16 is 100% of the total power output 150 and the power output 154 from the electric machine 70 is 0% of the total power output 150. In the exemplary embodiment, the controllers 102 limit the total power output 150 to 55% of a maximum power output (e.g., the sea level static (SLS) maximum engine rated thrust as detailed above) for the turbine engine 10 when the turbine engine control system 100 is in the full turbo-engine mode 108a. In this way, even if the user increases the position of the single throttle lever 104 greater than 55% of a total extent of the single throttle lever 104, the controllers 102 prevent the total power output 150 from increasing above 55% of the maximum power output when in the full turbo-engine mode 108a. In this way, the controllers 102 prevent the turbine engine 10 from operating in the high-power conditions when in the full turbo-engine mode 108a. This is due to the turbo-engine 16 and the electric machine 70 being capable of providing a maximum of 55% of the total power output 150 in a hybrid-electric turbine engine. While the exemplary embodiment is 55%, the value of the maximum power output from the turbo-engine 16 and from the electric machine 70 can include any value of at least 50%. In some embodiments, the value of the maximum power output from the turbo-engine 16 and from the electric machine 70 can include any split between 1% and 99%.

In one example, the full turbo-engine mode 108a is used in conditions when the electric machine 70 operation would be inefficient. For example, the full turbo-engine mode 108a is used in high altitude, extreme cold conditions, such as, for example, during cruise at such conditions (e.g., during mid-power conditions in such conditions). In one example, the full turbo-engine mode 108a is used in low-power conditions, such as, for example, during descent of the aircraft. In this way, the full turbo-engine mode 108a is used during low-power conditions or mid-power conditions, and is not used during high-power conditions. However, the full turbo-engine mode 108a can be used during any operating conditions, as desired.

FIG. 5B is a graph showing the throttle position versus the power output in the full electric mode 108b of the turbine engine control system 100, according to the present disclosure. As shown in FIG. 5B, the power output 154 from the electric machine 70 is 100% of the total power output 150 and the power output 152 from the turbo-engine 16 is 0% of the total power output 150. In the exemplary embodiment, the controllers 102 limit the total power output 150 to 55% of a maximum power output for the turbine engine 10 when the turbine engine control system 100 is in the full electric mode 108b. In this way, even if the user increases the position of the single throttle lever 104 greater than 55% of a total extent of the single throttle lever 104, the controllers 102 prevent the total power output 150 from increasing above 55% of the maximum power output when in the full electric mode 108b. In this way, the controllers 102 prevent the turbine engine 10 from operating in the high-power conditions when in the full electric mode 108b, similar to the full turbo-engine mode 108a.

In one example, the full electric mode 108b is used to reduce or to eliminate fuel consumption, emissions, or noise (e.g., due to the turbo-engine 16 being at 0%). In particular, the full electric mode 108b is used in the low-power operation, such as, for example, idle or taxiing. In this way, the full electric mode 108b is used during the low-power conditions and is not used during high-power conditions. However, the full electric mode 108b can be used during any operating conditions, as desired.

FIG. 5C is a graph showing the throttle position versus the power output in the automatic hybrid-electric mode 108c of the turbine engine control system 100, according to the present disclosure. As shown in FIG. 5C, the power output 152 from the turbo-engine 16 is greater than 0% and less than 100% of the total power output 150, and the power output 154 from the electric machine 70 is greater than 0% and less than 100% of the total power output 150. As mentioned earlier, the controllers 102 vary the power output 152 from the turbo-engine 16 and the power output 154 from the electric machine 70 in the automatic hybrid-electric mode 108c. The controllers 102 can control the power output 152 from the turbo-engine 16 and the power output 154 from the electric machine 70 to reduce fuel consumption or to reduce emissions in the automatic hybrid-electric mode 108c. As shown in FIG. 5C, the total power output 150 can be increased to 100% in the automatic hybrid-electric mode 108c as both the turbo-engine 16 and the electric machine 70 contribute to the total power output 150 (e.g., the power output 152 and the power output 154 are both greater than 0%).

In the exemplary embodiment, the power output 154 from the electric machine 70 is greater than the power output 152 from the turbo-engine 16 in the low-power operation (e.g., less than 30% of the maximum power of the turbine engine 10). The power output split between the turbo-engine 16 and the electric machine 70 switches during the mid-power operation (e.g., around 60% of the maximum power) such that the power output 152 from the turbo-engine 16 becomes greater than the power output 154 from the electric machine 70 during the mid-power operation and during the high-power operation. At full throttle, the total power output 150 is 100%, the power output 152 from the turbo-engine 16 is 55%, and the power output 154 from the electric machine 70 is 45%. These values are exemplary only, and the power output 152 and the power output 154 can include any split, and can be varied in any way during the automatic hybrid-electric mode 108c, as long as the power output 152 and the power output 154 are greater than 0% and less than 100%. Generally, the power split in the hybrid-electric mode 108c may be automatically determined by a controller based on stored scheduled and/or sensor values to increase fuel efficiency, reduce noise, etc.

FIG. 5D is a graph showing the throttle position versus the power output in a manual hybrid-electric mode 108d of the turbine engine control system 100, according to the present disclosure. As shown in FIG. 5D, the power output split between the turbo-engine 16 and the electric machine 70 is 80% power output 154 from the electric machine 70 and 20% power output 152 from the turbo-engine 16. The power output 152 from the turbo-engine 16 can be greater than 0% and less than 100% of the total power output 150, and the power output 154 from the electric machine 70 can be greater than 0% and less than 100% of the total power output 150. As mentioned earlier, the user can vary the power output 152 from the turbo-engine 16 and the power output 154 from the electric machine 70 in the manual hybrid-electric mode 108d (e.g., using the hybridization ratio buttons 108e). For example, the user can increase or decrease the power output 152 and the power output 154. In one example, the user can input the power output split between the turbo-engine 16 and the electric machine 70 based on regulations on noise or emissions in a particular airspace. In one example, the user can input the power output split between the turbo-engine 16 and the electric machine 70 based on a particular flight phase, operating conditions, or aircraft status.

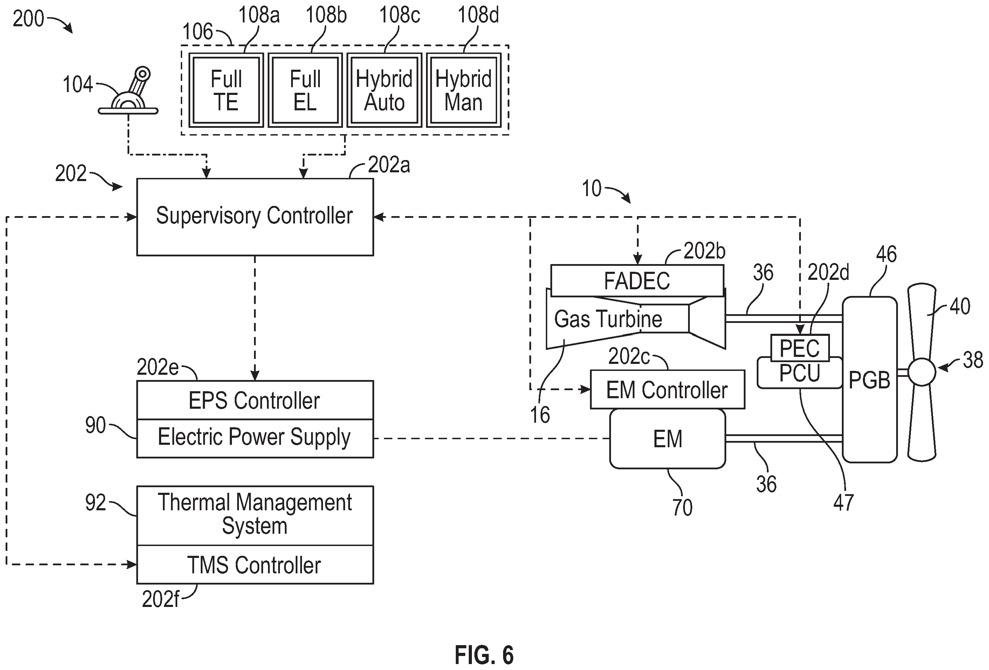

FIG. 6 is a schematic view of a turbine engine control system 200 for the turbine engine 10, according to another embodiment. The turbine engine control system 200 is substantially similar to the turbine engine control system 100 shown in FIG. 3. The same or similar reference numerals will be used for components of the turbine engine control system 200 that are the same as or similar to the components of the turbine engine control system 100 discussed above, unless stated otherwise. The description of these components above also applies to this embodiment, and a detailed description of these components is omitted here.

As shown in FIG. 6, the turbine engine control system 200 includes an electric power supply 90 for powering the electric machine 70. In particular, the electric power supply 90 supplies electricity to the electric machine 70. The electric power supply 90 can also supply the electricity to one or more aircraft systems for powering the one or more aircraft systems. The one or more aircraft systems can include, for example, avionic systems, electric pumps (e.g., for controlling flaps), air conditioning, internal lights, external lights, passenger accessories (e.g., video screens, LCD screens, power hookups, or USB hookups, etc., or combinations thereof), or to other electrical systems of the aircraft, the turbine engine 10, or combinations thereof.

The electric power supply 90 includes at least one of a fuel cell, one or more batteries, or an auxiliary power unit (APU) of the aircraft. The fuel cell can by a hydrogen fuel cell that converts hydrogen fuel (e.g., from the fuel system 80 in gaseous form) into electricity. In particular, the fuel cell converts chemical energy of the fuel (e.g., the gaseous hydrogen fuel) and an oxidizing agent (e.g., oxygen) into electricity through a pair of redox reactions. In this way, the fuel cell receives the gaseous hydrogen fuel and the oxidizing agent and generates electricity. The batteries can be any type of battery onboard the aircraft or on the turbine engine 10. The APU is a small engine on the aircraft that is separate from the turbine engine 10. The APU operates independently of the turbine engine 10 and is typically powered by the fuel system 80 that also powers the turbine engine 10. In some embodiments, the APU can be powered by a fuel system that is separate from the fuel system 80.

The turbine engine control system 200 also includes a thermal management system 92. The thermal management system 92 extracts excess heat from one or more components of the turbine engine 10. For example, the thermal management system 92 utilizes a cooling fluid to extract heat from the components of the turbine engine 10. The cooling fluid can include, for example, a lubricant (e.g., oil), the fuel, a coolant, air (e.g., compressed air), or the like. The thermal management system 92 can also cool electronics and power equipment on the turbine engine 10.

As shown in FIG. 6, the turbine engine control system 200 includes one or more controllers 202, the single throttle lever 104, and the one or more mode selector switch mechanisms 106 for selecting one of the plurality of modes 108 (e.g., the full turbo-engine mode 108a, the full electric mode 108b, the automatic hybrid-electric mode 108c, or the manual hybrid-electric mode 108d. The one or more controllers 202 include a supervisory controller 202a, a turbine engine controller 202b, an EM controller 202c, and a PEC 202d, similar to the embodiment of FIG. 3. The one or more controllers 202 also include an electric power supply (EPS) controller 202e and a thermal management system (TMS) controller 202f. The EPS controller 202e is associated with the electric power supply 90 for controlling aspects of the electric power supply. The TMS controller 202f is associated with the thermal management system 92 for controlling aspects of the thermal management system 92.

In the full electric mode 108b, the automatic hybrid-electric mode 108c, or the manual hybrid-electric mode 108d, the EPS controller 202e controls the electric power supplied from the EPS to the electric machine 70 based on an electric power demand calculated by the supervisory controller 102a based on the throttle lever input and the ambient conditions input 110. In the full turbo-engine mode 108a, the EPS controller 202e controls the electric power supply 90 in an idle mode or a standby mode, or can control the electric power supply 90 to shut down as there is no electrical power required in the full turbo-engine mode 108a.

The TMS controller 202f controls the thermal management system 92 to maintain temperatures of the various components within designed limits. In particular, the TMS controller 202f regulates heat rejection or fluid temperatures based on generated heat loads (e.g., higher power results in higher heat loads) and controls an amount of cooling flow delivered to the various components. In the full turbo-engine mode 108a, the electric power supply 90 and the electric machine 70 generate a low amount of heat, while the turbo-engine 16 generates a high amount of heat to be dissipated. In this scenario, the TMS controller 202f controls the thermal management system 92 to direct the cooling flows to provide a greater cooling flow to the turbo-engine 16 as compared to the cooling flow to the electric power supply 90 or the electric machine 70. Conversely, in the full electric mode 108b, the turbo-engine 16 generates a low amount of heat and the electric power supply 90 and the electric machine 70 generates a high amount of heat to be dissipated. In this scenario, the TMS controller 202f controls the thermal management system 92 to direct the cooling flows to provide a greater cooling flow to the electric power supply 90 and the electric machine 70 as compared to the cooling flow to turbo-engine 16. The TMS controller 202f controls the amount or the flow rate of the cooling flow to the turbo-engine 16 and to the electric power supply 90 and the electric machine 70 based on a position of the single throttle lever 104 (e.g., a greater amount of thrust requires a greater amount of cooling flow, and a lesser amount of thrust requires a lesser amount of cooling flow).

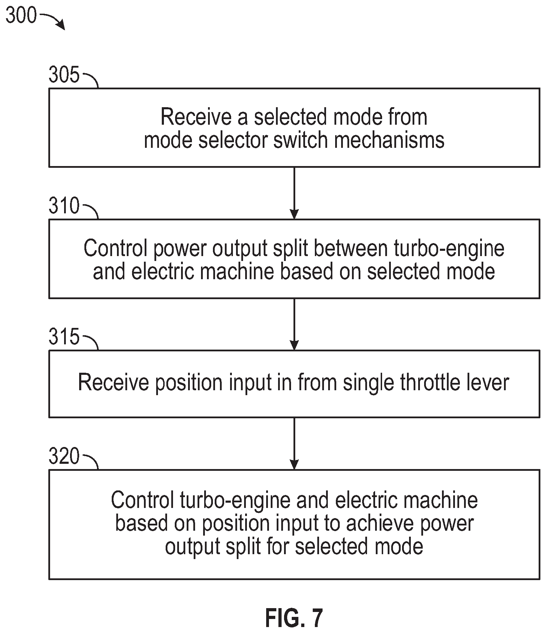

FIG. 7 is a flowchart of a method 300 of controlling the turbine engine 10, according to the present disclosure. While reference is made to the turbine engine control system of FIG. 3, the method 300 can be utilized for any of the turbine engine control systems detailed herein. The method 300 can be performed by the controllers 102 and reference is made to FIG. 3.

In step 305, the method 300 includes receiving an input of a selected mode of the plurality of modes 108 of the turbine engine 10. Each of the plurality of modes 108 defines a different power output split configuration between the turbo-engine 16 and the electric machine 70, as detailed above. In particular, the controllers 102 (e.g., the supervisory controller 102a) receive the input of the selected mode from the one or more mode selector switch mechanisms 106. The user can input the selected mode through the mode selector switch mechanisms 106, as detailed above. For example, the user can input the selected mode via the mode selector knob 106a or the display 106b by turning the mode selector knob 106a to the selected mode or actuating the buttons on the display 106b.

In step 310, the method 300 includes controlling the power output split between the turbo-engine 16 and the electric machine 70 based on the selected mode. In particular, the controllers 102 control the turbo-engine 16 and the electric machine 70 to achieve the power output split. For example, in the full turbo-engine mode 108a, the controllers 102 control the turbo-engine 16 so the power output from the turbo-engine 16 is 100% of the total power output and control the electric machine 70 so the power output from the electric machine 70 is 0% of the total power output. In the full electric mode 108b, the controllers 102 control the turbo-engine 16 so the power output from the turbo-engine 16 is 0% of the total power output and control the electric machine 70 so the power output from the electric machine 70 is 100% of the total power output. In the automatic hybrid-electric mode 108c, the controllers 102 control the turbo-engine 16 so the power output from the turbo-engine 16 and the electric machine 70 is greater than 0% and less than 100%. The controllers 102 automatically vary the power output split during the automatic hybrid-electric mode 108c, as detailed above. In the manual hybrid-electric mode 108d, the controllers 102 control the turbo-engine 16 so the power output from the turbo-engine 16 and the electric machine 70 is greater than 0% and less than 100%. The user can manually vary the power output split during the manual hybrid-electric mode 108d (e.g., using the hybridization ratio buttons 108e), as detailed above.

In step 315, the method 300 includes receiving a position input from the single throttle lever 104. In particular, the controllers 102 receive the position input from the single throttle lever 104. The position input includes a current position of the single throttle lever 104 between 0% and 100% of a full extent of the single throttle lever 104. The position input of the single throttle lever 104 corresponds to the total power output of the turbine engine 10 (e.g., the power output split between the turbo-engine 16 and the electric machine 70 for achieving the total power output).

In step 320, the method 300 includes controlling the turbo-engine 16 and the electric machine 70 based on the position input from the single throttle lever 104 to achieve the power output split for the selected mode. In particular, the controllers 102 determine the turbo-engine setpoint 112a, the EM setpoint 112b, and the propulsor setpoint 112c based on the position input of the single throttle lever 104 and the selected mode. The controllers 102 then output the turbo-engine setpoint 112a to the turbo-engine 16, the EM setpoint 112b to the electric machine 70, and the propulsor setpoint 112c to the propulsor 38 (e.g., the PCU 47) to achieve the total power output for the position input and to achieve the power output split for the selected mode. In this way, the turbine engine control system 100 controls the power output split, and, thus, the torque split, to the propulsor 38 from the turbo-engine 16 and the electric machine 70.

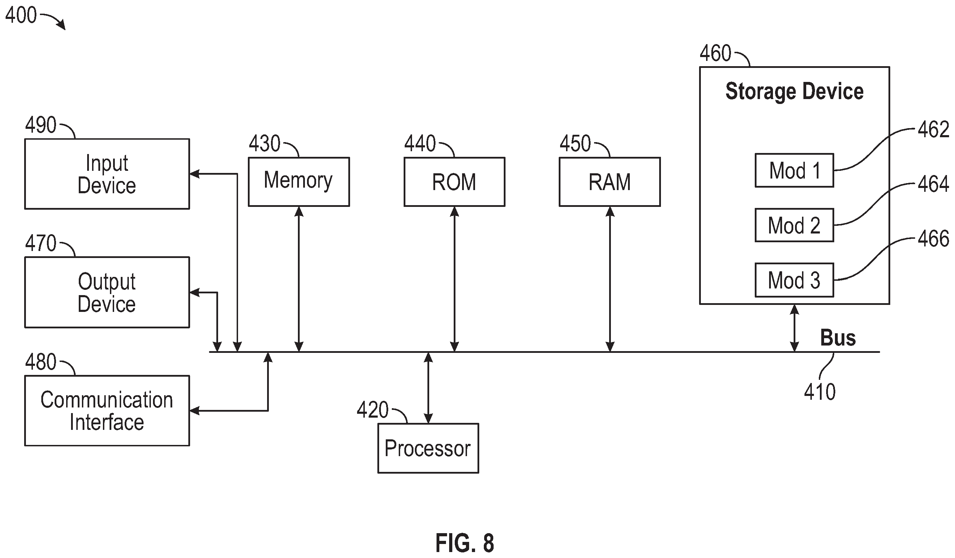

FIG. 8 shows a computing system 400, according to the present disclosure. The computing system 400 may carry out any of the methods or the systems described herein. The controllers described previously herein may be operated according to the computing system 400. The computing system 400 includes a general-purpose computing device, including a central processing unit (CPU), or a processor 420 (e.g., a processor of the controllers detailed above), and a system bus 410 that couples various system components, including a system memory 430 such as a read-only memory (ROM) 440 and a random-access memory (RAM) 450, to the processor 420. The computing system 400 can include a cache of high-speed memory connected directly with, in close proximity to, or integrated as part of the processor 420. The computing system 400 copies data from the system memory 430 or the storage device 460 to the cache for quick access by the processor 420. In this way, the cache provides a performance boost that avoids the processor 420 delays while waiting for data. These and other modules can control or be configured to control the processor 420 to perform various actions. Other system memory 430 may be available for use as well. The system memory 430 can include multiple different types of memory with different performance characteristics. The disclosure may operate on a computing system 400 with more than one processor 420 or on a group or a cluster of computing devices networked together to provide greater processing capability. The processor 420 can include any general-purpose processor and a hardware module or a software module, such as module 1 462, module 2 464, and module 3 466 stored in the storage device 460, configured to control the processor 420, as well as a special-purpose processor where software instructions are incorporated into the actual processor design. The processor 420 may essentially be a completely self-contained computing system, containing multiple cores or processors, a bus, memory controller, cache, etc. A multi-core processor may be symmetric or asymmetric.

The system bus 410 may be any of several types of bus structures, including a memory bus or a memory controller, a peripheral bus, and a local bus using any of a variety of bus architectures. A basic input/output system (BIOS) stored in the ROM 440, or the like, may provide the basic routine that helps to transfer information between elements within the computing system 400, such as during start-up. The computing system 400 further includes one or more storage devices 460 such as a hard disk drive, a magnetic disk drive, an optical disk drive, a tape drive, or the like. The storage devices 460 can include software modules 462, 464, and 466 for controlling the processor 420. Other hardware or software modules are contemplated. The storage device 460 is connected to the system bus 410 by a drive interface. The drives and the associated computer-readable storage media provide nonvolatile storage of computer-readable instructions, data structures, program modules, and other data for the computing system 400. In one aspect, a hardware module that performs a particular function includes the software component stored in a tangible computer-readable storage medium in connection with the necessary hardware components, such as the processor 420, the system bus 410, the output device 470, and so forth, to carry out the function. In another aspect, the computing system 400 can use a processor and a computer-readable storage medium to store instructions that, when executed by a processor (e.g., one or more processors), cause the processor to perform a method or other specific actions. The basic components and appropriate variations are contemplated depending on the type of device, such as whether the computing system 400 is a small, handheld computing device, a desktop computer, or a computer server.

Although the exemplary embodiment described herein employs the storage device 460, other types of computer-readable media that can store data that are accessible by a computer, such as magnetic cassettes, flash memory cards, digital versatile disks, cartridges, random-access memories (RAMs) 450, and a read-only memory (ROM) 440, may also be used in the exemplary operating environment. Tangible computer-readable storage media, computer-readable storage devices, or computer-readable memory devices, expressly exclude media such as transitory waves, energy, carrier signals, electromagnetic waves, and signals per se.

To enable user interaction with the computing system 400, an input device 490 represents any number of input mechanisms, such as a microphone for speech, a touch-sensitive screen for a gesture, or a graphical input, a keyboard, a mouse, a motion input, speech, and so forth. In particular, the input device 490 can include the mode selector knob 106a and the display 106b of FIG. 3. An output device 470 can also be one or more of a number of output mechanisms known to those of skill in the art. In particular, the output device 470 can include the turbo-engine 16 and the electric machine 70 of FIG. 3. In some instances, multimodal systems enable a user to provide multiple types of input to communicate with the computing system 400. The communications interface 480 generally governs and manages the user input and the system output. There is no restriction on operating on any particular hardware arrangement and, therefore, the basic features here may easily be substituted for improved hardware or firmware arrangements as they are developed.

The technology discussed herein refers to computer-based systems and actions taken by, and information sent to and from, computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

Accordingly, the turbine engine control systems 100 and 200 can control the power output from the turbo-engine 16 and the electric machine 70, and the speed and the pitch of the propulsor 38 based on the input from the single throttle lever 104. In this way, the turbine engine 10 of the present disclosure requires only a selected mode 108 and a single throttle lever 104 to be actuated by the pilot to control the turbo-engine 16, the electric machine 70, and the propulsor 38, thus, reducing pilot workload, allowing the pilot to better focus attention on other needs.

Further aspects of the present disclosure are provided by the subject matter of the following clauses.

A turbine engine control system for a turbine engine having a turbo-engine, an electric machine, and a propulsor drivingly coupled to the turbo-engine and the electric machine, the turbine engine control system comprising one or more mode selector switch mechanisms, the one or more mode selector switch mechanisms having a plurality of modes that each defines a different power output split configuration between the turbo-engine and the electric machine, and a controller that receives an input of a selected mode of the plurality of modes from the one or more mode selector switch mechanisms, and controls a power output split between the turbo-engine and the electric machine based on the selected mode.

The turbine engine control system of the preceding clause, wherein the plurality of modes includes a full turbo-engine mode in which 100% of the power output is from the turbo-engine and a full electric mode in which 100% of the power output is from the electric machine, and the controller prevents the turbine engine control system from switching directly between the full turbo-engine mode and the full electric mode.

The turbine engine control system of any preceding clause, wherein the selected mode is an automatic hybrid-electric mode, and the controller controls the turbo-engine and the electric machine to automatically vary the power output split between the turbo-engine and the electric machine in the automatic hybrid-electric mode.

The turbine engine control system of any preceding clause, wherein the selected mode is a manual hybrid-electric mode, and the controller receives a user input of the power output split between the turbo-engine and the electric machine and controls the power output split based on the user input.

The turbine engine control system of any preceding clause, wherein the selected mode is a full turbo-engine mode, and the controller controls the turbo-engine and the electric machine such that a power output from the turbo-engine is 100% of a total power output for the turbine engine and a power output from the electric machine is 0% of the total power output in the full turbo-engine mode.

The turbine engine control system of any preceding clause, wherein the controller controls the turbo-engine such that the total power output is less than 55% of a maximum power output of the turbine engine in the full turbo-engine mode.

The turbine engine control system of any preceding clause, wherein the selected mode is a full electric mode, and the controller controls the turbo-engine and the electric machine such that a power output from the turbo-engine is 0% of a total power output for the turbine engine and a power output from the electric machine is 100% of the total power output in the full electric mode.

The turbine engine control system of any preceding clause, wherein the controller controls the electric machine such that the total power output is less than 55% of a maximum power output of the turbine engine in the full electric mode.

The turbine engine control system of any preceding clause, further comprising a single throttle lever, wherein the controller receives a position input from the single throttle lever and controls the turbo-engine and the electric machine based on the position input from the single throttle lever to achieve the power output split for the selected mode.

The turbine engine control system of any preceding clause, wherein the turbine engine includes a thermal management system that extracts excess heat from one or more components of the turbine engine, and the controller controls the thermal management system based on the position input from the single throttle lever.

The turbine engine control system of any preceding clause, wherein the turbine engine includes an electric power supply that supplies electricity to the electric machine, and the controller controls the electric power supply based on the position input from the single throttle lever.

The turbine engine control system of any preceding clause, wherein the controller controls the turbo-engine and the electric machine in the automatic hybrid-electric mode such that a power output from the turbo-engine and a power output from the electric machine is less than 55% of a total power output of the turbine engine.

The turbine engine control system of any preceding clause, wherein the controller controls the turbo-engine and the electric machine in the manual hybrid-electric mode such that a power output from the turbo-engine and a power output from the electric machine is less than 55% of a total power output of the turbine engine.

A turbine engine control system for a turbine engine having a turbo-engine, an electric machine, and a propulsor drivingly coupled to the turbo-engine and the electric machine, the turbine engine control system comprising a single throttle lever and a controller that receives a position input from the single throttle lever and controls the turbo-engine and the electric machine based on the position input from the single throttle lever to achieve a power output split between the turbo-engine and the electric machine.

The turbine engine control system of the preceding clause, wherein the controller has a plurality of modes that each defines a different power output split configuration between the turbo-engine and the electric machine, and the controller controls the power output split between the turbo-engine and the electric machine based on a selected mode of the plurality of modes.

The turbine engine control system of the preceding clause, further comprising one or more mode selector switch mechanisms, the one or more mode selector switch mechanisms having the plurality of modes, wherein the controller receives an input of the selected mode of the plurality of modes from the one or more mode selector switch mechanisms and controls the power output split between the turbo-engine and the electric machine based on the selected mode.

The turbine engine control system of any preceding clause, wherein the plurality of modes includes a full turbo-engine mode in which 100% of the power output is from the turbo-engine and a full electric mode in which 100% of the power output is from the electric machine, and the controller prevents the turbine engine control system from switching directly between the full turbo-engine mode and the full electric mode.

The turbine engine control system of any preceding clause, wherein the selected mode is an automatic hybrid-electric mode, and the controller controls the turbo-engine and the electric machine to automatically vary the power output split between the turbo-engine and the electric machine in the automatic hybrid-electric mode.

The turbine engine control system of any preceding clause, wherein the selected mode is a manual hybrid-electric mode, and the controller receives a user input of the power output split between the turbo-engine and the electric machine and controls the power output split based on the user input.

The turbine engine control system of any preceding clause, wherein the selected mode is a full turbo-engine mode, and the controller controls the turbo-engine and the electric machine such that a power output from the turbo-engine is 100% of a total power output for the turbine engine and a power output from the electric machine is 0% of the total power output in the full turbo-engine mode.

The turbine engine control system of any preceding clause, wherein the controller controls the turbo-engine such that the total power output is less than 55% of a maximum power output of the turbine engine in the full turbo-engine mode.

The turbine engine control system of any preceding clause, wherein the selected mode is a full electric mode, and the controller controls the turbo-engine and the electric machine such that a power output from the turbo-engine is 0% of a total power output for the turbine engine and a power output from the electric machine is 100% of the total power output in the full electric mode.

The turbine engine control system of any preceding clause, wherein the controller controls the electric machine such that the total power output is less than 55% of a maximum power output of the turbine engine in the full electric mode.

The turbine engine control system of any preceding clause, wherein the controller controls the turbo-engine and the electric machine in the automatic hybrid-electric mode such that a power output from the turbo-engine and a power output from the electric machine is less than 55% of a total power output of the turbine engine.

The turbine engine control system of any preceding clause, wherein the controller controls the turbo-engine and the electric machine in the manual hybrid-electric mode such that a power output from the turbo-engine and a power output from the electric machine is less than 55% of a total power output of the turbine engine.

The turbine engine control system of any preceding clause, wherein the turbine engine includes a thermal management system that extracts excess heat from one or more components of the turbine engine, and the controller controls the thermal management system based on the position input from the single throttle lever.

The turbine engine control system of any preceding clause, wherein the turbine engine includes an electric power supply that supplies electricity to the electric machine, and the controller controls the electric power supply based on the position input from the single throttle lever.

A method of operating a turbine engine, the method comprising receiving an input of a selected mode of a plurality of modes, each of the plurality of modes a different a different power output split configuration between a turbo-engine and an electric machine of the turbine engine, and controlling a power output split between the turbo-engine and the electric machine of the turbine engine based on the selected mode.

The method of the preceding clause, further comprising receiving a position input from a single throttle lever and controlling the turbo-engine and the electric machine based on the position input from the single throttle lever to achieve the power output split for the selected mode.

The method of any preceding clause, wherein the plurality of modes includes a full turbo-engine mode in which 100% of the power output is from the turbo-engine and a full electric mode in which 100% of the power output is from the electric machine, the method further comprising preventing the turbine engine from switching directly between the full turbo-engine mode and the full electric mode.

The method of any preceding clause, wherein the selected mode is an automatic hybrid-electric mode, the method further comprising automatically varying the power output split between the turbo-engine and the electric machine in the automatic hybrid-electric mode.

The method of any preceding clause, wherein the selected mode is a manual hybrid-electric mode, the method further comprising receiving a user input of the power output split between the turbo-engine and the electric machine, and controlling the power output split based on the user input.

The method of any preceding clause, wherein the selected mode is a full turbo-engine mode, the method further comprising controlling the turbo-engine and the electric machine such that a power output from the turbo-engine is 100% of a total power output for the turbine engine and a power output from the electric machine is 0% of the total power output in the full turbo-engine mode.

The method of any preceding clause, further comprising controlling the turbo-engine such that the total power output is less than 55% of a maximum power output of the turbine engine in the full turbo-engine mode.

The method of any preceding clause, wherein the selected mode is a full electric mode, the method further comprising controlling the turbo-engine and the electric machine such that a power output from the turbo-engine is 0% of a total power output for the turbine engine and a power output from the electric machine is 100% of the total power output in the full electric mode.

The method of any preceding clause, further comprising controlling the electric machine such that the total power output is less than 55% of a maximum power output of the turbine engine in the full electric mode.

A method of operating a turbine engine having the turbine engine control system of any preceding clause, the method comprising: receiving an input of a selected mode of the plurality of modes, each of the plurality of modes being a different power output split configuration between the turbo-engine and the electric machine of the turbine engine; and controlling a power output split between the turbo-engine and the electric machine of the turbine engine based on the selected mode.

The method of any preceding clause, further comprising receiving a position input from a single throttle lever and controlling the turbo-engine and the electric machine based on the position input from the single throttle lever to achieve the power output split for the selected mode.

The method of any preceding clause, wherein the plurality of modes includes a full turbo-engine mode in which 100% of the power output is from the turbo-engine and a full electric mode in which 100% of the power output is from the electric machine, the method further comprising preventing the turbine engine from switching directly between the full turbo-engine mode and the full electric mode.

The method of any preceding clause, wherein the selected mode is an automatic hybrid-electric mode, the method further comprising automatically varying the power output split between the turbo-engine and the electric machine in the automatic hybrid-electric mode.

The method of any preceding clause, wherein the selected mode is a manual hybrid-electric mode, the method further comprising receiving a user input of the power output split between the turbo-engine and the electric machine and controlling the power output split based on the user input.

The method of any preceding clause, wherein the selected mode is a full turbo-engine mode, the method further comprising controlling the turbo-engine and the electric machine such that a power output from the turbo-engine is 100% of a total power output for the turbine engine and a power output from the electric machine is 0% of the total power output in the full turbo-engine mode.

The method of any preceding clause, further comprising controlling the turbo-engine such that the total power output in the full turbo-engine mode is less than 55% of a maximum power output of the turbine engine.

The method of any preceding clause, wherein the selected mode is a full electric mode, the method further comprising controlling the turbo-engine and the electric machine such that a power output from the turbo-engine is 0% of a total power output for the turbine engine and a power output from the electric machine is 100% of the total power output in the full electric mode.

The method of any preceding clause, further comprising controlling the electric machine such that the total power output in the full electric mode is less than 55% of a maximum power output of the turbine engine.

Although the foregoing description is directed to the preferred embodiments of the present disclosure, other variations and modifications will be apparent to those skilled in the art and may be made without departing from the disclosure. Moreover, features described in connection with one embodiment of the present disclosure may be used in conjunction with other embodiments, even if not explicitly stated above.

## Claims

1. A turbine engine control system for a turbine engine having a turbo-engine, an electric machine, and a propulsor drivingly coupled to the turbo-engine and the electric machine, the turbine engine control system comprising:
one or more mode selector switch mechanisms, the one or more mode selector switch mechanisms having a plurality of modes that each defines a different power output split configuration between the turbo-engine and the electric machine; and
a controller that:
receives an input of a selected mode of the plurality of modes from the one or more mode selector switch mechanisms; and
controls a power output split between the turbo-engine and the electric machine based on the selected mode.

2. The turbine engine control system of claim 1, wherein the plurality of modes includes a full turbo-engine mode in which 100% of a power output is from the turbo-engine and a full electric mode in which 100% of the power output is from the electric machine, and the turbine engine control system prevents the plurality of modes from switching directly between the full turbo-engine mode and the full electric mode.

3. The turbine engine control system of claim 1 or 2, wherein the selected mode is an automatic hybrid-electric mode, and the controller controls the turbo-engine and the electric machine to automatically vary the power output split between the turbo-engine and the electric machine in the automatic hybrid-electric mode.

4. The turbine engine control system of any preceding claim, wherein the selected mode is a manual hybrid-electric mode, and the controller receives a user input of the power output split between the turbo-engine and the electric machine and controls the power output split based on the user input.

5. The turbine engine control system of any preceding claim, wherein the selected mode is a full turbo-engine mode, and the controller controls the turbo-engine and the electric machine such that a power output from the turbo-engine is 100% of a total power output for the turbine engine and a power output from the electric machine is 0% of the total power output in the full turbo-engine mode.

6. The turbine engine control system of claim 5, wherein the controller controls the turbo-engine such that the total power output in the full turbo-engine mode is less than 55% of a maximum power output of the turbine engine.

7. The turbine engine control system of any preceding claim, wherein the selected mode is a full electric mode, and the controller controls the turbo-engine and the electric machine such that a power output from the turbo-engine is 0% of a total power output for the turbine engine and a power output from the electric machine is 100% of the total power output in the full electric mode.

8. The turbine engine control system of claim 7, wherein the controller controls the electric machine such that the total power output in the full electric mode is less than 55% of a maximum power output of the turbine engine.

9. The turbine engine control system of any preceding claim, further comprising a single throttle lever, wherein the controller receives a position input from the single throttle lever and controls the turbo-engine and the electric machine based on the position input from the single throttle lever to achieve the power output split for the selected mode.

10. The turbine engine control system of claim 9, wherein the turbine engine includes a thermal management system that extracts excess heat from one or more components of the turbine engine, and the controller controls the thermal management system based on the position input from the single throttle lever.

11. The turbine engine control system of claim 9 or 10, wherein the turbine engine includes an electric power supply that supplies electricity to the electric machine, and the controller controls the electric power supply based on the position input from the single throttle lever.

12. A method of operating a turbine engine having the turbine engine control system of any preceding claim, the method comprising:
receiving an input of a selected mode of the plurality of modes, each of the plurality of modes being a different power output split configuration between the turbo-engine and the electric machine of the turbine engine; and
controlling a power output split between the turbo-engine and the electric machine of the turbine engine based on the selected mode.

13. The method of claim 12, further comprising receiving a position input from a single throttle lever and controlling the turbo-engine and the electric machine based on the position input from the single throttle lever to achieve the power output split for the selected mode.

14. The method of claim 12 or 13, wherein the plurality of modes includes a full turbo-engine mode in which 100% of the power output is from the turbo-engine and a full electric mode in which 100% of the power output is from the electric machine, the method further comprising preventing the turbine engine from switching directly between the full turbo-engine mode and the full electric mode.

15. The method of any of claims 12 to 14, wherein the selected mode is an automatic hybrid-electric mode, the method further comprising automatically varying the power output split between the turbo-engine and the electric machine in the automatic hybrid-electric mode.
